# EUROPÄISCHE PATENTSCHRIFT

(11) **EP 2 665 600 B1**
(45) Veröffentlichungstag und Bekanntmachung des Hinweises auf die Patenterteilung: **14.03.2018**
(21) Anmeldenummer: 12701474.4
(22) Anmeldetag: 17.01.2012
(51) Int. Cl.: B29C 53/66, D01D 5/24, B29K 307/04, B29C 70/24, B29L 23/00, B29C 70/38

(54) **VERFAHREN ZUM HERSTELLEN EINER SCHLAUCHFÖRMIGEN FASERANORDNUNG EINES FASERVERSTÄRKTEN VERBUNDBAUTEILS UND SCHLAUCHFÖRMIGE FASERANORDNUNG**
METHOD FOR PRODUCING A TUBULAR FIBER ARRANGEMENT OF A FIBER-REINFORCED COMPOSITE PART AND TUBULAR FIBER ARRANGEMENT
PROCÉDÉ DE FABRICATION D'UN DISPOSITIF À FIBRES EN FORME DE TUBE D'UN ÉLÉMENT COMPOSITE RENFORCÉ PAR FIBRES ET DISPOSITIF À FIBRES EN FORME DE TUBE

(30) Priorität: 18.01.2011 DE 102011002840
(43) Veröffentlichungstag der Anmeldung: 27.11.2013
(73) Patentinhaber: SGL Kümpers GmbH & Co. KG, 48429 Rheine (DE)
(72) Erfinder: BROCKMANNS, Karl-Josef, 86405 Meitingen (DE); KÜMPERS, Franz-Jürgen, 86405 Meitingen (DE); BAUMGART, Gregor, 86405 Meitingen (DE)
(74) Vertreter: Poxleitner, Simon
(86) Internationale Anmeldenummer: PCT/EP2012/050650
(87) Internationale Veröffentlichungsnummer: WO 2012/098122

(56) Entgegenhaltungen:
- EP-A1- 1 990 303
- WO-A1-91/14480
- GB-A- 1 282 588
- US-A- 4 283 446
- US-A- 4 790 898

## Beschreibung

### GEBIET DER ERFINDUNG

Die vorliegende Erfindung betrifft ein Verfahren zum Herstellen einer schlauchförmigen Faseranordnung als Zwischenprodukt für ein faserverstärktes Verbundbauteil, welches eine sich über seine Länge ändernde Querschnittsform besitzt.

### HINTERGRUND DER ERFINDUNG

Faserverstärkte Verbundbauteile erfreuen sich zunehmender Beliebtheit, weil sie im Vergleich zu herkömmlichen Bauteilen ein vergleichsweise geringes Eigengewicht aufweisen und in besonders flexibler Art und Weise hergestellt und eingesetzt werden können.

Problematisch bei herkömmlichen faserverstärkten Verbundbauteilen ist jedoch, dass bei der Ausbildung von Hohlprofilen, bei denen die Fasern um einen Kern angeordnet werden, die Dichte der Faseranordnung entsprechend dem Profil des Kernes respektive der Zielform des Faserverbundbauteils erheblich schwankt und dabei oft Schwachstellen in der mechanischen Beanspruchbarkeit des späteren Verbundbauteils entstehen können.

Zum Beispiel bei einem das notwendige Maß übersteigenden Materialeinsatz bei der Faserverstärkung erhöhen sich die Materialkosten und andererseits führt dies auch zu geometrischen Problemen, wenn nämlich aufgrund des übermäßigen Materialeinsatzes der der Faserverstärkung zu Grunde liegende Grundkörper in seiner Geometrie nach außen hin verfälscht d.h. nicht in den korrekten Proportionen abgebildet wird.

Durch die DE 196 25 798 A1 ist es bereits bekannt geworden, zur Vermeidung der Erzeugung eines mit erheblichem Aufwand auf einen Kern maßgeschneiderten Textilschlauches aus Verstärkungsfasern für einen Kraftfahrzeuglenker einen textilen Strumpf zu erzeugen, der eine präventiv der Kernform angepasste, ungleichmäßige Verteilung des Fasermaterials besitzt, die sich beim Aufziehen des Strumpfes auf den Kern vergleichmäßigen soll. Das heißt, eine zunächst dichtere Faseranordnung trifft später auf Auswölbungen des Kernes und soll sich damit nach dem Aufziehen der Dichte der Faseranordnung in den übrigen Bereichen anpassen. Nachteilig dabei ist, dass das nachträgliche Aufziehen des Schlauches auf den Kern genau diesen erwünschten Effekt nicht bewirken dürfte, da zum Beispiel beim Passieren größerer Kerndurchmesser Bereiche aufgeweitet werden, die später für einen geringeren Kerndurchmesser vorgesehen sind und dabei Fasern oder Faserstränge verschoben werden, was letztlich zu ungleichmäßiger Festigkeit und Stabilität und damit zu Schwachstellen des erzeugten Verbundbauteils führt.

Durch das deutsche Gebrauchsmuster DE 78 26 718 U1, das ein Zwischenprodukt gemäß dem Oberbegriff des Anspruchs 10 offenbart, ist es bekannt, ein schlauchförmiges Geflecht mit variierendem Durchmesser als biegsames Gebilde herzustellen, welches als Zwischenprodukt für steife und leichte Teile, also zum Beispiel durch Harz imprägnierte Verbundbauteile wie Sportartikel oder für industrielle Anwendungen, dient. Um eine gewünschte gleichbleibende Dicke des Geflechtes zu erzielen, wird hier der Flechtwinkel, also der Winkel der Fadenablage zur Längsachse des Geflechts, variiert, das heißt, der Flechtwinkel wird für geringere Querschnitte durch eine erhöhte Transportgeschwindigkeit während des Flechtens reduziert und für größere Querschnitte durch eine geringere Transportgeschwindigkeit erhöht. Dadurch wird die Richtung der maximalen Zugkraftaufnahmefähigkeit durch die Fasern, beispielsweise Glasfäden oder Karbonfäden, die zum Beispiel für solche Bauteile zur Anwendung kommen, verändert. Geht man nun davon aus, dass die Richtung der Faserablage möglichst der Belastungsrichtung des späteren Verbundbauteils entsprechen sollte, kommt es in Anwendung der Lehre dieses Dokuments zu einer mehr oder weniger deutlichen Abweichung von Faserablagerichtung und Krafteinleitungsrichtung, was die Substanzausnutzung der teuren Fasermaterialien deutlich reduziert und eine Überdimensionierung der Faseranordnung für das Erreichen der notwendigen Stabilitätswerte erfordert.
Zur Angleichung eines Flechtprozesses an die sich ändernde Querschnittsform des umflochtenen Kerns wurde auch schon in der nicht vorveröffentlichten DE 10 2010 047 193 A1 vorgeschlagen, den sogenannten Flechtring, der die Flechtfäden vor dem Flechtpunkt bündelt, in seinem Durchmesser an den gegenwärtigen Kerndurchmesser flexibel anzupassen. Dies führt zwar zu einer durchmesserunabhängigeren Flechtgeometrie und damit einer Vergleichmäßigung der Flechtbedingungen, löst aber nicht das Problem der sich durchmesserabhängig ändernden Geflechtdicke.

Das Dokument US 4,790,898 offenbart ein Verfahren gemäß dem Oberbegriff des Anspruchs 1.

### ZUSAMMENFASSUNG DER ERFINDUNG

Der Erfindung liegt die Aufgabe zu Grunde, ein Verfahren zum Herstellen einer schlauchförmigen Faseranordnung eines faserverstärkten Verbundbauteils sowie eine schlauchförmige Faseranordnung als Zwischenprodukt für ein Verbundbauteil anzugeben, wobei den lokalen Gegebenheiten im Hinblick auf die Geometrie des Verbundbauteils sowie dessen Belastungsprofil auf besonders einfache und zuverlässige Art und Weise Rechnung getragen werden soll.

Die der Erfindung zu Grunde liegende Aufgabe wird verfahrensseitig erfindungsgemäß mit den Merkmalen des Patentanspruchs 1 gelöst.

Die erfindungsgemäße schlauchförmige Faseranordnung ist im Anspruch 10 unter Schutz gestellt.

Vorteilhafte Weiterbildungen des erfindungsgemäßen Verfahrens zum Herstellen der schlauchförmigen Faseranordnung eines faserverstärkten Verbundbauteils sind Gegenstand der abhängigen Ansprüche.

Durch das erfindungsgemäße Verfahren wird gesichert, dass eine weitestgehend gleichbleibende Dichte und damit auch Dicke der Faseranordnung unabhängig von Querschnittsschwankungen des Kernes, auf dem die Faseranordnung gebildet wird, gewährleistet wird. Damit werden Verfälschungen der Geometrie des später aus dem Zwischenprodukt der schlauchförmigen Faseranordnung gebildeten Verbundbauteiles vermieden. Vor allem aber werden vorgegebene Faserausrichtungen, die mit der späteren Belastungsrichtung im Verbundbauteil zusammenfallen sollen, bei Durchmesseränderungen zumindest nicht spürbar beeinträchtigt. Letzteres wird auch insbesondere dadurch erreicht, dass im Gegensatz zum Stand der Technik die Anpassung der Fasermasse an den jeweiligen Querschnitt des Kerns, auf dem die schlauchförmige Faseranordnung gebildet wird, nicht durch unterschiedliche Vorschubgeschwindigkeit, die zu unterschiedlichen Ablagewinkeln führt, realisiert wird.

Die Faseranordnung im Sinne vorliegender Erfindung ist als Anordnung von insbesondere grobtitrigen Fäden oder Bändchen aus Glas, Karbon oder anderer hochfester Materialien zu verstehen, die üblicherweise für die Herstellung von faserverstärkten Verbundbauteilen zur Anwendung kommen. Da der Durchmesser respektive der Umfang des der Form des Verbundbauteils entsprechenden Kerns sich mehr oder weniger schnell oder stark ändert, kann die Variation der Fasermasse nicht völlig synchron durchgeführt werden. Unter proportional soll deshalb hier auch zu verstehen sein, dass zum Beispiel eine stufenweise Anpassung erfolgt und/oder die Anpassung nicht alle Ausschläge der Umfangswerte vollständig erfasst, da ansonsten die Anforderungen an die technische Umsetzung der Variation der Fasermasse deren Nutzen übersteigen könnten.

Vorteilhaft wird die Faseranordnung durch ein Gelege gebildet. Dabei kommen insbesondere so genannte 0°-Fäden, die im Wesentlichen parallel zur Längserstreckung des Kernes verlaufen und Längskräfte aufnehmen sollen und Umwindefäden, die in Winkeln zwischen 0° und 90° zur Längsausdehnung des Kernes verlaufen, zum Einsatz. Gelege haben den Vorteil, dass durch Vermeidung von Kreuzungspunkten wie bei Geflechten oder Gewirken die Fasern sehr gestreckt angeordnet sind und ein ausgezeichnetes Kraftaufnahmeverhalten besitzen. Eine sich kreuzende Faserstruktur ist dann jedoch gut geeignet, das Gelege abzubinden, um dessen gegenseitige Verschiebung zu verhindern und den Fadenverband bis zur späteren Harzimprägnierung zu fixieren. Derartige Verfahren sind zum Beispiel aus der WO 2007/090555 A2 bekannt und brauchen deshalb hier nicht näher beschrieben zu werden.

Als sich kreuzende Fadenstruktur kommt insbesondere ein Geflecht in Betracht.

Alternativ ist jedoch eine Gewirkestruktur geeignet, die Gelegeschichten abzubinden.

Die Veränderung der Fasermasse kann vorteilhaft dadurch erreicht werden, dass sich die Feinheit der zugeführten Fäden ändert.
Hierzu kann mittels einer Entfernungsvorrichtung die Anzahl der Einzelfasern, aus denen die jeweiligen Fäden gebildet sind, reduziert oder mit einer automatisierten Aufbringungsvorrichtung erhöht werden. Vorteilhaft sind die Entfernungsvorrichtung und die
Aufbringungsvorrichtung in einer Vorrichtung zusammengefasst, da nach dem Entfernen von Fasern zur Erzielung der vorherigen Fadenfeinheit das erneute Aufbringen von Fasern erforderlich ist.
Zum Aufbringen von Fasern kommen vorteilhaft Kleber zum Einsatz, die im Hinblick auf die spätere Imprägnierung auf Harzbasis beruhen.

Anstelle der Veränderung der Fadenfeinheit der verwendeten Fäden kann die Anpassung der Fasermasse auch durch Veränderung der Anzahl zum Beispiel an der Gelegebildung beteiligter Fäden erfolgen. Die Reduzierung der Fadenanzahl wird durch Abtrennen von Fäden erreicht. Die Erhöhung der Fadenanzahl erfolgt dadurch, dass zum Beispiel vorher abgetrennte und weiter in Reserve gehaltene Fäden wieder zugeführt werden. Die Fixierung der Fadenanfänge kann auch hier durch einen Kleber unterstützt werden.

Um den lokalen Querschnitt des Verbundbauteiles respektive des mit der schlauchförmigen Faseranordnung zu belegenden Kern zu ermitteln, sind mechanische Tastsensoren oder flächige Lichtschrankenanordnungen oder ähnliches denkbar.

Die erfindungsgemäße als Zwischenprodukt für ein faserverstärktes Verbundbauteil dienende schlauchförmige Faseranordnung besitzt eine im Querschnitt des Kerns, auf dem Sie abgelegt ist zum sich aus dessen Durchmesser ergebenden lokalen Umfang proportionale Fasermasse, wobei die Ausrichtung der Fasern bezüglich der Längsrichtung des Kerns unabhängig vom lokalen Umfang des Kerns weitgehend konstant ist. Daraus ergibt sich eine gleichmäßige Struktur des Verbundbauteils und vor allem eine zuverlässig hohe Ausrichtung der Fasern in der späteren Belastungsrichtung.

### AUSFÜHRUNGSBEISPIELE

Die Erfindung soll nachstehend an Hand von Ausführungsbeispielen näher erläutert werden.

In den zugehörigen Zeichnungen zeigen
- Figur 1 zwei kegelstumpfartige Verbundbauteile, einmal nach dem Stand der Technik (prior art) und zum Anderen in Anwendung der Erfindung,
- Figuren 2 bis 10 den Verfahrensablauf bei der Verringerung der Fasermasse und anschließendem Wiederherstellen der alten Fasermasse,
- Figur 11 ein Verbundbauteil mit drei unterschiedlichen Durchmessern und Belegung mit einer durchmesserabgängig veränderlichen Fadenanzahl und
- Figur 12 ein Verbundbauteil mit vergleichbarer Struktur wie in Figur 11 für die Belegung mit Umwindefasern.

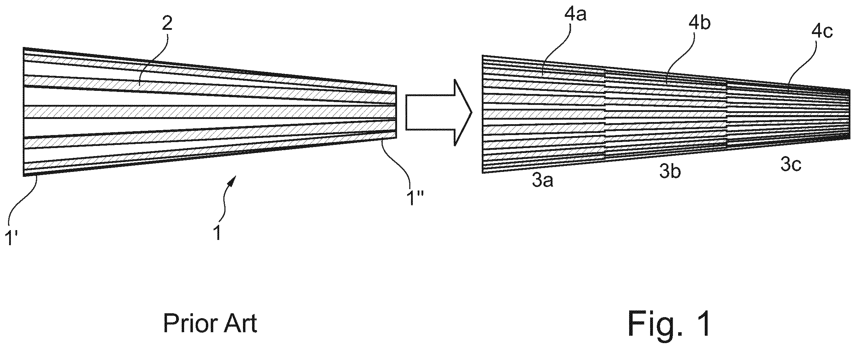

Ein Verbundbauteil gemäß Figur 1 als prior art mit kegelstumpfförmiger Ausbildung zeigt die Belegung mit so genannten Stehfäden (0°-Fäden) 2, die über die Länge des Verbundbauteils 1 eine gleich bleibende Fasermasse besitzen. Dadurch ergibt sich in Richtung vom kleinen zum großen Durchmesser eine stetig abnehmende Faserbelegung des Verbundbauteilumfangs. Im Bereich des großen Durchmessers weisen die Fäden einen deutlichen Abstand auf, was sich für die Kraftaufnahme in Längsrichtung im Verbundbauteil negativ auswirkt. Eine insgesamt dichtere Fadenbelegung hingegen würde dazu führen, dass sich im Bereich des kleinen Durchmessers die Fäden überlappen, für die Kraftaufnahme überdimensioniert sind und zu einer Verfälschung der Geometrie nach außen hin führen würden. Dem gegenüber ist in der rechts in Figur 1 dargestellten Version des gleichen Faserverbundbauteiles zu erkennen, dass in allen drei Abschnitten 3a bis 3c ein durchschnittlich gleicher Fadenabstand besteht. Die Stehfäden 4a bis 4c weisen unterschiedliche Fasermassen auf, das heißt, die Fasermasse der Fäden 4a bis 4c nimmt vom großen Durchmesser / Umfang zum kleinen Durchmesser / Umfang stufenweise ab. Die Änderung der Fasermasse innerhalb jedes Abschnittes 3a bis 3c kann vernachlässigt werden. Im Sinne der Erfindung teilt sich die Fasermasse proportional zum Durchmesser beziehungsweise Umfang des Verbundkörpers auf.

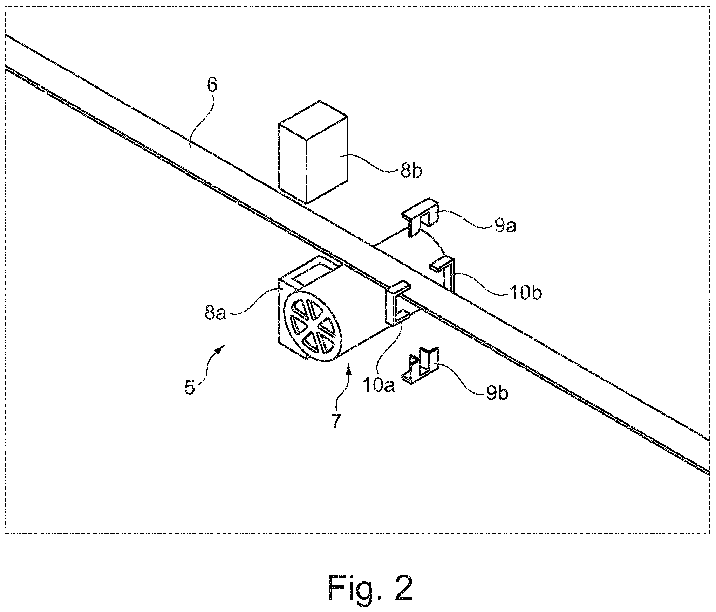

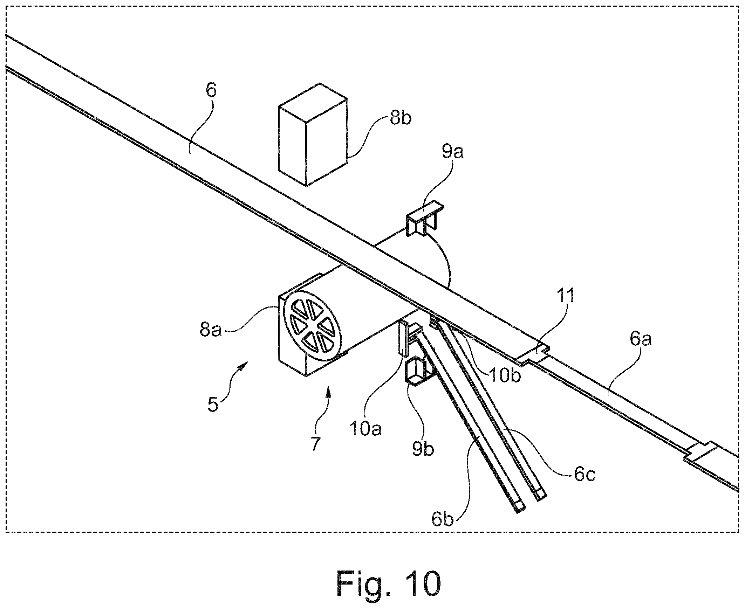

In den Figuren 2 bis 10 ist dargestellt, wie die Feinheit eines Fadens mittels einer Entfernungs- und Aufbringungsvorrichtung 5 variiert werden kann. So wird zum Beispiel ein Karbonfaden 6 mittels einer Transporteinrichtung 7 transportiert und anschließend einer nicht dargestellten Flechteinrichtung als Stehfaden zugeführt. In der Flechteinrichtung werden eine Vielzahl parallel zugeführter Stehfäden dann durch sich kreuzende Fäden abgebunden.

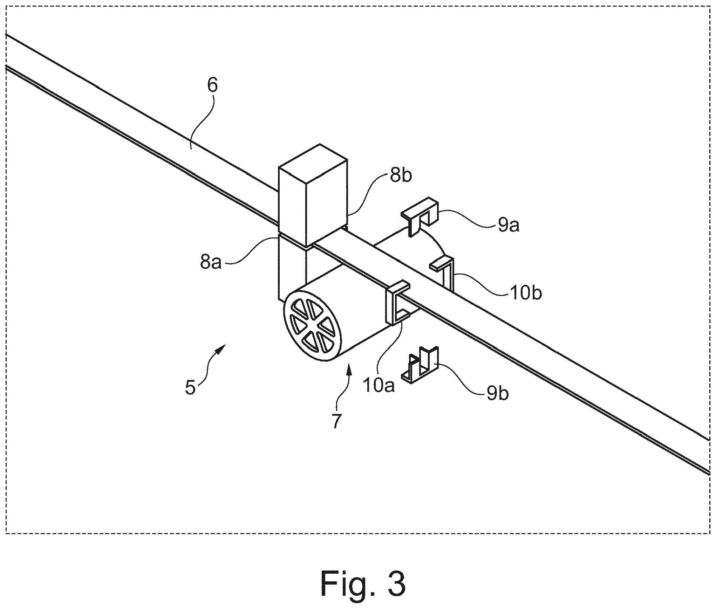

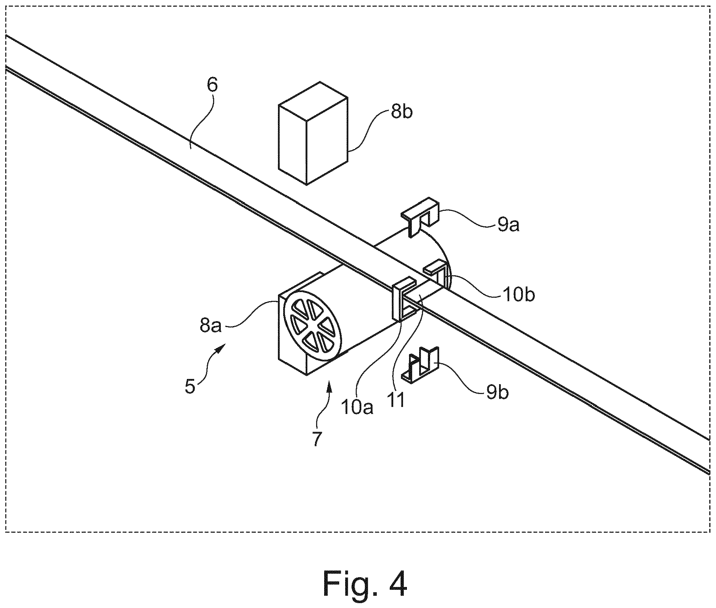

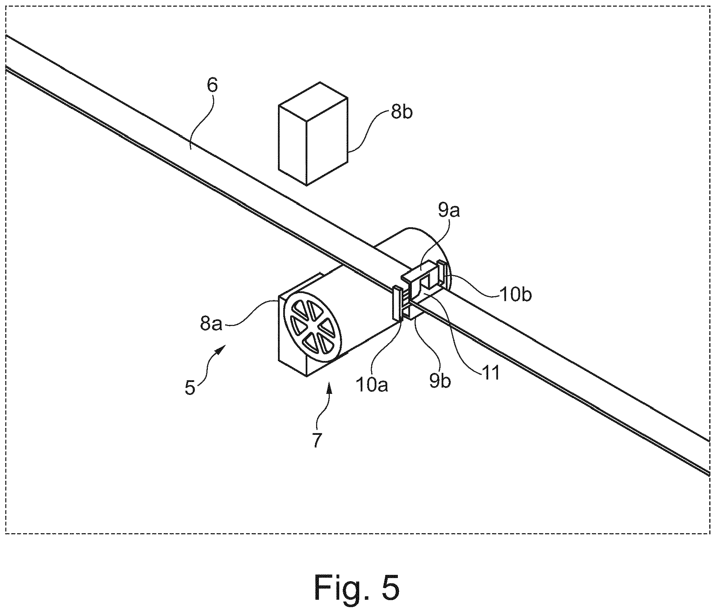

In der Ausgangsstellung in Figur 2 weist der Karbonfaden 6 eine konstante Breite beziehungsweise Fadenfeinheit auf. In Figur 3 ist zu erkennen, dass mittels einer so genannten Etikettiereinrichtung 8a, 8b ein Etikett zur Stabilisierung aufgebracht wird, welches dann eine Schnittstelle verstärkt, an der die Fadenbreite sprunghaft verändert wird. In Figur 4 ist der mit einem Etikett versehene Abschnitt einer Trenneinrichtung 9a, 9b mit Klemmeinrichtung 10a, 10b, zugeführt. In Figur 5 ist dann zu erkennen, dass die Trenneinrichtung 9a, 9b betätigt wird, während durch die Klemmeinrichtung 10a, 10b der Karbonfaden 6 im Bereich der Trennung fixiert ist.

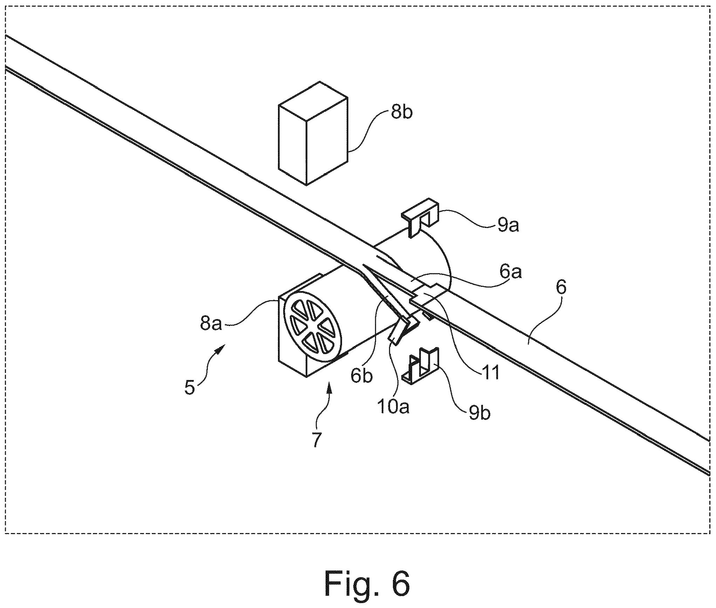

Figur 6 zeigt dann, dass abgespaltene Längsabschnitte 6b, 6c des Karbonfadens 6 abgetrennt und von der Klemmeinrichtung 10a beziehungsweise 10b abgeführt werden.

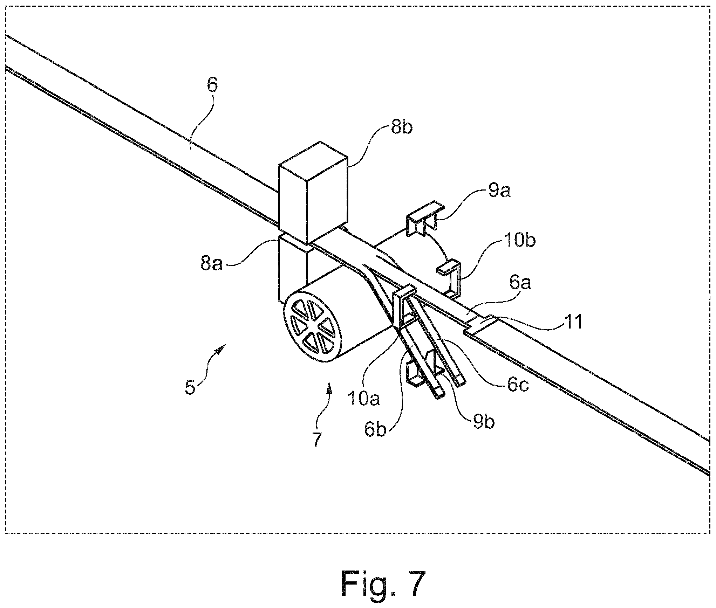

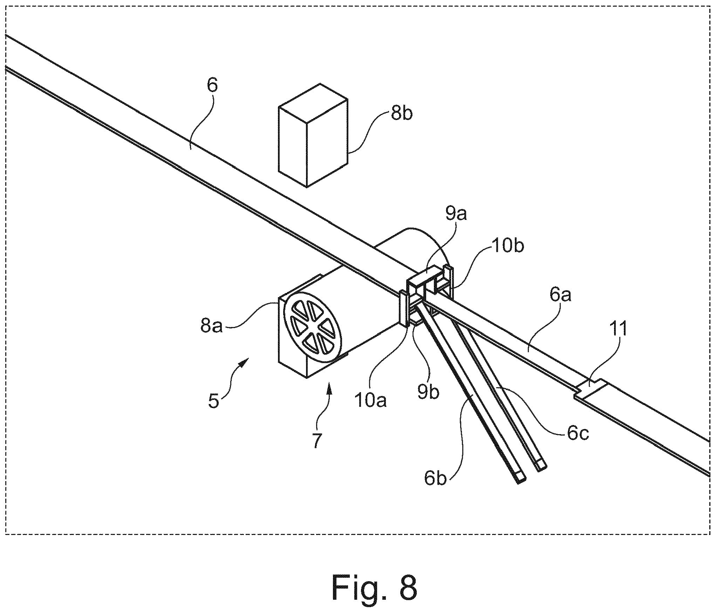

In Figur 7 ist der weitere Fortschritt der Bewegung des Karbonfadens 6 zu erkennen, wobei die abgetrennten Abschnitte 6b und 6c sowie der verbleibende Mittelabschnitt 6a eine inzwischen größere Länge aufweisen. Inzwischen ist die Etikettiereinrichtung 8a, 8b wieder tätig und bringt ein neues Etikett an der Stelle auf, an der die darauffolgende Veränderung der Fasermasse erfolgen soll. Dies ist dann in Figur 8 zu sehen, in der im Bereich des zweiten Etiketts die Einrichtung 9a und 9b und die Klemmeinrichtungen 10a und 10b tätig sind.

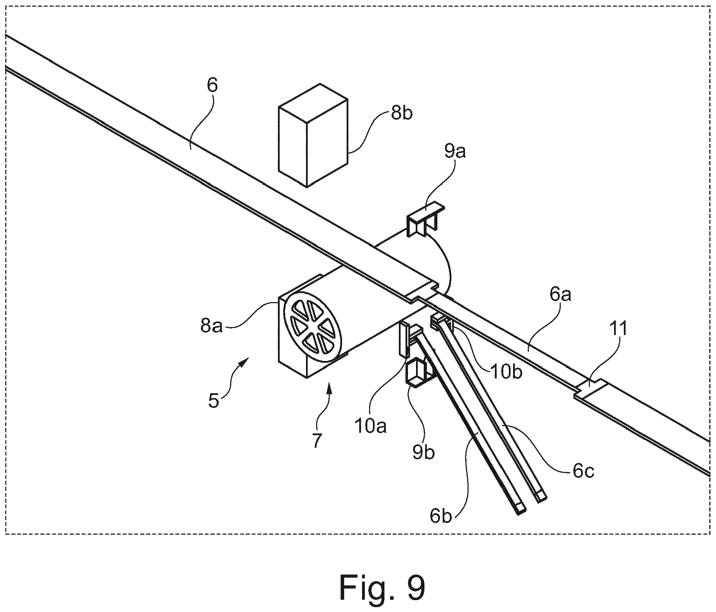

In Figur 9 ist dann zu erkennen, wie die abgetrennten Fadenabschnitte 6b und 6c abgeführt werden. Hinter dem Abschnitt 6a mit verringerter Fasermasse schließt sich dann der "normale" Karbonfaden 6 wieder an. Ein so behandelter, als Stehfaden zugeführter Karbonfaden 6, 6a würde beispielsweise Verwendung finden, wenn zwischen zwei Abschnitten mit großem Durchmesser, ein Abschnitt mit kleinerem Durchmesser verläuft. Vorteilhaft bei diesem Ausbildungsbeispiel ist, dass die Entfernungsvorrichtung und die Aufbringungsvorrichtung in einer Vorrichtung zusammengefasst sind. Diese Vorrichtung eignet sich für solche Anwendungsfälle, bei denen die Karbonfäden 6 überwiegend Abschnitte aufweisen, in denen die maximale Feinheit des Fadens erforderlich ist. Ansonsten wäre der Faserabtrag zu groß, obwohl die beim Karbonfaden 6 entfernten Fasern wieder recycelt werden können. Alternativ ist denkbar, die abgetrennten Fadenabschnitte im gleichen Prozess wieder zu verwenden, in dem diese auf den Karbonfaden 6 an Stellen aufgebracht werden, an denen aufgrund eines großen Durchmessers eine hohe Feinheit des Karbonfadens erforderlich ist.

Schließlich ist es auch möglich, den Prozess der Erzeugung von Abschnitten unterschiedlicher Fadenfeinheit diskontinuierlich, also stufenweise durchzuführen. Dies kann beispielsweise dadurch erreicht werden, dass zunächst Fäden hergestellt werden, die jeweils Abschnitte mit unterschiedlicher Fadenfeinheit aufweisen und anschließend auf einen Träger aufgewindet werden. In einem nachgeschalteten Prozess werden die Fäden dann wieder abgezogen. Dies erfordert jedoch eine sehr genaue Abstimmung der Prozesse, um ein Aufsummieren von Phasenverschiebungen zu vermeiden. Besonders ist an eine solche Anwendung dann zu denken, wenn nacheinander gleiche Kerne belegt respektive Verbundbauteile hergestellt werden und jeweils zu Anfang eines neuen Teils eine Synchronisation durch zum Beispiel Entfernen eines Fadenabschnitts oder Veränderung des gegenseitigen Abstands erfolgt.

Es ist auch denkbar, unterschiedliche Fadenabschnitte, das heißt, Fadenabschnitte mit unterschiedlicher Feinheit miteinander zu verbinden. Hiefür könnte beispielsweise ein Verfahren und eine Vorrichtung, wie sie aus der WO 2008/135 280 A1 bekannt sind, angewendet werden.

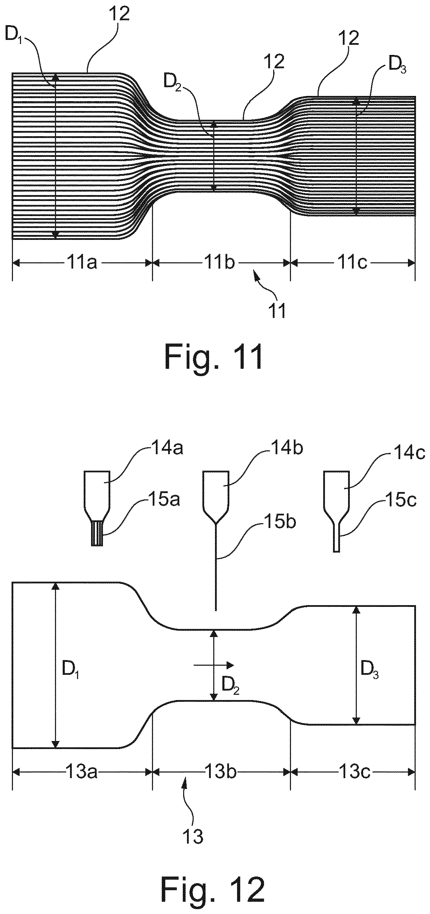

Bei der in Figur 11 dargestellten Version eines Verbundbauteiles 11 welches aus den Abschnitten 11a bis 11c besteht, wird die jeweils zugeführte Fasermasse durch die Anzahl der auch als Stehfäden ausgebildeten Fäden 12 variiert. Wie ohne weiteres aus Figur 11 erkennbar ist, ist im Bereich des Durchmessers D1, der gleichzeitig der größte Durchmesser an dem Verbundbauteil 11 ist, die Anzahl der Stehfäden am höchsten. Diesem Abschnitt 11a folgt ein Abschnitt 11b, in dem die geringste Anzahl von Stehfäden zur Anwendung kommt, während im darauf folgenden Bereich 11c aufgrund des mittleren Durchmessers D3 eine mittlere Anzahl von Fäden 12 zum Einsatz kommt. Sinnvoll ist, an den Stellen, an denen die Fadenanzahl sich ändert, mit Hilfe eines Klebers dafür zu sorgen, dass eine ordnungsgemäße Zuführung der Stehfäden erfolgen kann. Diese Stellen stellen auch keinen Schwachpunkt in der späteren Anwendung dar, da es sich hierbei zunächst um ein Zwischenprodukt handelt, welches durch Verharzen seine endgültige Stabilität erhält.

In Figur 12 ist dargestellt, dass ein Verbundbauteil 13, welches, wie durch einen Pfeil dargestellt, zum Beispiel von links nach rechts bewegt wird, mit Umwindefäden 15a bis 15c belegt wird, die durch Wickelköpfe 14a bis 14c zugeführt werden. In den Abschnitten 13a bis 13c sind wieder unterschiedliche Durchmesser D1 bis D3 vorhanden, an die jeweils die Stärke der Verbundfäden 15a bis 15c so angepasst ist, dass eine im Wesentlichen gleiche Belegung mit Umwindefasern unabhängig vom jeweiligen Durchmesser erfolgen kann. Die Wickelköpfe 14a bis 14c rotieren zu diesem Zweck um den im Vorschub befindlichen Verbundkörper 13 schraubenförmig. Die Bewegung des Verbundkörpers während des Wickelvorgangs ist gleichbleibend, wodurch die Steigung der Fäden ebenfalls gleichbleibend ist und dem hinsichtlich der späteren Krafteinleitung gewünschten Ablagewinkel entspricht. Außerdem wird durch die sich ändernde Fadenstärke erreicht, dass sich die Belegungsdichte nur unwesentlich, zum Beispiel in den Übergangsbereichen, ändert.

Um sicher zu stellen, dass die Faserablage im Verbundbauteil unterschiedlichen Belastungsrichtungen gerecht wird, werden in der Regel verschiedene Gelegearten, das heißt, Aufbringung von Fäden in unterschiedlichen Richtungen kombiniert. Beispielsweise könnten der Prozess der Einbringung von Stehfäden und das Umwinden nacheinander am gleichen Grundbauteil erfolgen, wobei zu Beginn des Belegungsprozesses lediglich ein Kernmaterial vorliegt, welches im Wesentlichen bereits die Form des späteren Verbundbauteils besitzt.

Die Fixierung der Gelegefäden erfolgt dann beispielsweise mittels einer Rundflechtmaschine, wie sie beispielsweise in dem Gebrauchsmuster DE 78 26 718 U1 oder der DE 10 2010 047 193 A1 beschrieben ist. Auch zum Beispiel der DE 10 2010 047 193 A1 kann entnommen werden, wie der Transport des Kernes und die sensorische Erfassung des lokalen Durchmessers erfolgt.

## Patentansprüche

1. Verfahren zum Herstellen einer schlauchförmigen Faseranordnung als Zwischenprodukt für ein faserverstärktes Verbundbauteil (11, 13), welches eine sich über seine Länge ändernde Querschnittsform (11a, 11b, 11c, 13a, 13b, 13c) besitzt, wobei die schlauchförmige Faseranordnung auf einem der Form des Verbundbauteils entsprechenden Kern gebildet wird,
**dadurch gekennzeichnet, dass**
sich die während der Schlauchbildung zugeführte Fasermasse zum sich aus dem Durchmesser (D1, D2, D3) ergebenden lokalen Umfang des Verbundbauteils proportional verhält, wobei die Vorschubgeschwindigkeit des Kerns im Wesentlichen konstant bleibt.

2. Verfahren nach Anspruch 1,
**dadurch gekennzeichnet, dass**
die Faseranordnung aus einem Gelege gebildet wird.

3. Verfahren nach Anspruch 2,
**dadurch gekennzeichnet, dass**
das Gelege aus sich längs erstreckenden Fasern und/oder Umwindefasern gebildet und durch eine sich kreuzende Faserstruktur abgebunden wird.

4. Verfahren nach Anspruch 2 oder 3,
**dadurch gekennzeichnet, dass**
die sich kreuzende Faserstruktur ein Geflecht ist.

5. Verfahren nach Anspruch 2 oder 3,
**dadurch gekennzeichnet, dass**
die sich kreuzende Faserstruktur ein Gewirke ist.

6. Verfahren nach einem der vorhergehenden Ansprüche,
**dadurch gekennzeichnet, dass**
Fäden zur Erzeugung der sich abhängig vom lokalen Umfang des Verbundbauteils verändernden Fasermasse eine geringere oder eine höhere Feinheit aufweisen.

7. Verfahren nach Anspruch 6,
**dadurch gekennzeichnet, dass**
dass während des Verarbeitens der Fäden (12, 15a, 15b, 15c) eine vorbestimmte Anzahl an Fasern aus den Fäden, insbesondere mittels einer automatisierten Entfernungsvorrichtung, entfernt wird.

8. Verfahren nach Anspruch 6,
**dadurch gekennzeichnet, dass**
dass während des Verarbeitens der Fäden eine vorbestimmte Anzahl an Fasern auf den Fäden, insbesondere mittels einer automatisierten Aufbringungsvorrichtung, aufgebracht, insbesondere aufgeklebt, wird.

9. Verfahren nach einem der Ansprüche 1 bis 5,
**dadurch gekennzeichnet, dass**
die Anzahl der Fäden zur Erzeugung der sich abhängig vom lokalen Umfang des Verbundbauteils verändernden Fasermasse verändert wird.

10. Schlauchförmige Faseranordnung als Zwischenprodukt für ein faserverstärktes Verbundbauteil (11, 13), welches eine sich über seine Länge ändernde Querschnittsform (11A, 11B, 11C, 13A, 13B, 13C) besitzt, wobei die schlauchförmige Faseranordnung auf einem der Form des Verbundbauteils entsprechenden Kern gebildet wird und wobei sich die Fasermasse im Querschnitt des Kerns zum sich aus dessen Durchmesser (D1, D2, D3) ergebenden lokalen Umfang proportional verhält,
**dadurch gekennzeichnet, dass**
die Ausrichtung der Fasern unabhängig vom lokalen Umfang des Kerns weitgehend konstant ist.

## Claims

1. Method for producing a tubular fibre arrangement as an intermediate product for a fibre-reinforced composite part (11, 13) which has a cross-sectional shape (11a, 11b, 11c, 13a, 13b, 13c) which changes over the length thereof, the tubular fibre arrangement being formed on a core which corresponds to the shape of the composite part, **characterised in that** the fibre mass supplied during the tube formation is proportional to the local circumference of the composite part resulting from the diameter (D1, D2, D3), the feed rate of the core remaining substantially constant.

2. Method according to claim 1, **characterised in that** the fibre arrangement is formed from a laid scrim.

3. Method according to claim 2, **characterised in that** the laid scrim is formed from fibres extending longitudinally and/or wrap fibres and is skeined using an interlacing fibre structure.

4. Method according to either claim 2 or claim 3, **characterised in that** the interlacing fibre structure is a braid.

5. Method according to either claim 2 or claim 3, **characterised in that** the interlacing fibre structure is a knitted fabric.

6. Method according to any of the preceding claims, **characterised in that** threads for producing the fibre mass which changes depending on the local circumference of the composite part have a relatively low or relatively high fineness.

7. Method according to claim 6, **characterised in that**, during the processing of the threads (12, 15a, 15b, 15c), a predetermined quantity of fibres is removed from the threads, in particular by means of an automated removal device.

8. Method according to claim 6, **characterised in that**, during the processing of the threads, a predetermined quantity of fibres is applied, in particular adhered, to the threads, in particular by means of an automated application device.

9. Method according to any of claims 1 to 5, **characterised in that** the quantity of threads for producing the fibre mass which changes depending on the local circumference of the composite part is changed.

10. Tubular fibre arrangement as an intermediate product for a fibre-reinforced composite part (11, 13) which has a cross-sectional shape (11A, 11B, 11C, 13A, 13B, 13C) which changes over the length thereof, the tubular fibre arrangement being formed on a core which corresponds to the shape of the composite part and the fibre mass in the cross section of the core being proportional to the local circumference resulting from the diameter (D1, D2, D3) thereof, **characterised in that** the orientation of the fibres is largely constant independently of the local circumference of the core.

## Revendications

1. Procédé de fabrication d'un assemblage de fibres tubulaire comme produit intermédiaire pour un élément composite fibro-renforcé (11, 13), qui possède une forme en coupe transversale se modifiant sur la longueur (11a, 11b, 11c, 13a, 13b, 13c), dans lequel l'assemblage de fibres tubulaire est constitué sur un noyau correspondant à la forme de l'élément composite, **caractérisé en ce que** la masse de fibres alimentée pendant la formation en tube se comporte proportionnellement au volume local de l'élément composite résultant du diamètre (D1, D2, D3), dans lequel la vitesse d'entraînement vers l'avant du noyau reste sensiblement constante.

2. Procédé selon la revendication 1, **caractérisé en ce que** l'assemblage de fibres est constitué à partir d'un canevas léger.

3. Procédé selon la revendication 2, **caractérisé en ce que** le canevas léger est constitué à partir de fibres à extension longitudinale et/ou des fibres enroulées et est lié par une structure de fibres croisée.

4. Procédé selon la revendication 2 ou 3, **caractérisé en ce que** la structure de fibres croisée est un maillage.

5. Procédé selon la revendication 2 ou 3, **caractérisé en ce que** la structure de fibres croisée est un tissu tricoté,

6. Procédé selon l'une quelconque des revendications précédentes, **caractérisé en ce que** les fils utilisés pour produire la masse de fibres se modifiant en fonction du volume local de l'élément composite présentent une finesse plus ou moins importante.

7. Procédé selon la revendication 6, **caractérisé en ce que**, pendant le traitement des fils (12, 15a, 15b, 15c), un nombre prédéterminé de fibres est extrait des fils, en particulier au moyen d'un dispositif d'extraction automatisé.

8. Procédé selon la revendication 6, **caractérisé en ce que**, pendant le traitement des fils, un nombre prédéterminé de fibres est rabattu sur les fils, en particulier au moyen d'un dispositif de rabattage automatisé, et en particulier collé sur les fils.

9. Procédé selon l'une quelconque des revendications 1 à 5, **caractérisé en ce qu'**on modifie le nombre de fils utilisés pour produire la masse de fibres se modifiant en fonction du volume local de l'élément composite.

10. Assemblage de fibres tubulaire comme produit intermédiaire pour un élément composite fibro-renforcé (11, 13), qui possède une forme en coupe transversale se modifiant sur la longueur (11A, 11B, 11C, 13A, 13B, 13C), dans lequel l'assemblage de fibres tubulaire est constitué sur un noyau correspondant à la forme de l'élément composite et dans lequel la masse de fibres dans la coupe transversale du noyau se comporte proportionnellement au volume local résultant du diamètre (D1, D2, D3),
**caractérisé en ce que** l'orientation des fibres est en grande partie constante, indépendamment du volume local du noyau.
